# EUROPEAN PATENT SPECIFICATION

(11) **EP 3 730 558 B1**
(45) Date of publication and mention of the grant of the patent: **03.11.2021**
(21) Application number: 17935693.6
(22) Date of filing: 21.12.2017
(51) Int. Cl.: C09D 11/108, C09D 11/102, C09D 11/38

(54) **AQUEOUS INKJET INK, METHOD FOR PRODUCING AQUEOUS INKJET INK, PRINTED MATERIAL AND INKJET RECORDING METHOD**
WÄSSRIGE TINTENSTRAHLTINTE, VERFAHREN ZUR HERSTELLUNG VON WÄSSRIGER TINTENSTRAHLTINTE, BEDRUCKTES MATERIAL UND TINTENSTRAHLAUFZEICHNUNGSVERFAHREN
ENCRE AQUEUSE POUR JET D'ENCRE, PROCÉDÉ DE PRODUCTION D'ENCRE AQUEUSE POUR JET D'ENCRE, MATÉRIAU IMPRIMÉ ET PROCÉDÉ D'ENREGISTREMENT PAR JET D'ENCRE

(43) Date of publication of application: 28.10.2020
(73) Proprietor: KONICA MINOLTA, INC., Tokyo 100-7015 (JP)
(72) Inventor: TOEDA, Takayuki, Tokyo 100-7015 (JP); MORIYAMA, Haruka, Tokyo 100-7015 (JP); TAGORI, Hirotaka, Tokyo 100-7015 (JP)
(74) Representative: Hoffmann Eitle
(86) International application number: PCT/JP2017/045881
(87) International publication number: WO 2019/123595

(56) References cited:
- EP-A1- 2 532 718
- WO-A1-2014/087670
- WO-A1-2017/159124
- JP-A- 2003 511 498
- JP-A- 2008 144 146
- JP-A- 2009 046 568
- JP-A- 2010 131 785
- JP-A- 2010 241 953
- JP-A- 2013 193 324
- JP-A- 2013 194 206
- JP-A- 2017 095 554

## Description

### Technical Field

The present invention relates to an aqueous inkjet ink, a method for producing an aqueous inkjet ink, a printed material, and an inkjet recording method. More particularly, the present invention relates to an aqueous inkjet ink which is excellent in adhesiveness to a base material and storage stability and can suppress bronzing.

### Background

Since the inkjet method can produce an image easily and inexpensively, it has been applied to various printing fields including photography, various types of printing, marking, and special printing such as color filters. In particular, the inkjet method is particularly suitable for uses in which a variety of images are formed in small quantities, since digital printing is possible without using a plate.

Inkjet inks used in the inkjet method include a plurality of types of water-based inks composed of water and a small amount of an organic solvent, non-aqueous inks containing an organic solvent but not substantially containing water, hot-melt inks that heat and melt solid inks at room temperature for printing, and active-light curable inks that cure by irradiation with active light after printing. Among these, water-based inks are widely used in household printers because of their low odor and high safety.

As such an aqueous inkjet ink, an aqueous inkjet ink containing a specific solvent and a polyester urethane resin having a polyolefin structure to improve adhesion to an olefin base material is disclosed (for example, see Patent Document 1). In this aqueous inkjet ink, the olefin structure and the polyester urethane structure coexist in the same polymer, but in this state, the effect of the olefin structure in the resin on the olefin base material becomes limited, and the adhesiveness is further improved by the specific solvent, so that the adhesiveness is not sufficient. In addition, an aqueous inkjet ink containing a polyester resin having a polyolefin structure to improve adhesiveness to an olefin base material has been disclosed (for example, refer to Patent Document 2), however, even in the aqueous inkjet ink, if the resin contained therein is a polyester resin, the action of the partial structure on the adhesive surface to the olefin base material is weak as compared with the polyurethane resin, and the adhesiveness is not sufficient. In addition, aqueous inkjet inks are required to have excellent storage stability and to suppress bronzing.

### Prior art Documents

### Patent Documents

Patent Document 1: JP-A 2017-75291
Patent Document 2: JP-A2016-196619

### Summary of the Invention

### Problems to be solved by the Invention

The present invention has been made in view of the above-mentioned problems and status, and an object of the present invention is to provide an aqueous inkjet ink, a method for producing an aqueous inkjet ink, a printed material, and an inkjet recording method, which are excellent in adhesiveness to a base material and storage stability and can suppress bronzing.

### Means to solve the Problems

In order to solve the above-mentioned problems, the present inventor has found that, in the process of examining the cause of the above-mentioned problems, by using a specific organic solvent and using composite resin particles in which a polyolefin resin is contained in a polyurethane resin as water¥insoluble resin particles, it is possible to provide an aqueous inkjet ink which is excellent in adhesiveness to a base material and storage stability and which can suppress bronzing. That is, the above-mentioned problem according to the present invention is solved by the following means.
1. An aqueous inkjet ink comprising water-insoluble resin particles, an organic solvent, a color material, and water, wherein the organic solvent contains an organic solvent selected from glycols or diols, and the water-insoluble resin particles contain a composite resin in which a polyolefin resin is contained in a polyurethane resin.
2. The aqueous inkjet ink according to item 1, wherein the water-insoluble resin particles contain a composite resin in which a polyolefin resin is emulsified in a polyurethane resin.
3. The aqueous inkjet ink according to item 1 or 2, wherein a content of the water-insoluble resin particles is in the range of 2 to 10 mass%.
4. The aqueous inkjet ink according to any one of items 1 to 3, wherein a value of a mass ratio (U/O) of the polyurethane resin (U) and the polyolefin resin (O) in the composite resin particles is in the range of 40/60 to 95/5.
5. The aqueous inkjet ink according to any one of items 1 to 4, wherein a content of the organic solvent is in the range of 10 to 50 mass%.
6. The aqueous ink jet ink according to any one of items 1 to 5, wherein the organic solvent contains at least any one of ethylene glycol, diethylene glycol, propylene glycol, 1,3-propanediol, 2-methyl-1,3-propanediol, 2,2-dimethyl-1,3-propanediol, 1,4-butanediol, 2-methyl-2,4-pentanediol, 3-methyl-1,5-pentanediol, and 1,6-hexanediol.
7. A method of producing an aqueous inkjet ink according to any one of items 1 to 6, comprising the steps of: forming composite resin particles by emulsifying and dispersing a polyolefin resin and a polyurethane resin; and mixing the composite resin particles, an organic solvent, a color material, and water.
8. A printed material comprising a printed layer formed on a non-absorptive film substrate using the aqueous inkjet ink according to any one of items 1 to 6.
9. An inkjet recording method comprising the step of forming an image on a non-absorptive film substrate using the aqueous inkjet ink according to any one of items 1 to 6.

### Effects of the Invention

According to the above-mentioned means of the present invention, it is possible to provide an aqueous inkjet ink, a method for producing an aqueous inkjet ink, a printed material, and an inkjet recording method, which are excellent in adhesiveness to a base material and storage stability, and which are capable of suppressing bronzing. The expression mechanism or action mechanism of the effect of the present invention is not clarified, but is inferred as follows. The polyurethane resin and the polyolefin resin are excellent in adhesiveness to the nonpolar base material, and further, in order to have stronger adhesiveness which is required in recent years, it is conceivable to use these resins in combination. However, when these are contained in the ink, since the solvent, the pigment dispersant, and the surfactant coexist, the storage stability becomes poor. For example, when a polar resin such as a polyurethane resin and a polyolefin resin are mixed alone, the stability is poor. Therefore, in the present invention, by using a composite resin in which a polyolefin resin is contained in a polyurethane resin as the water-insoluble resin particles, it is inferred that the stability of the composite resin is improved because two resin portions exist in one particle. Further, when an inkjet ink containing such a composite resin is formed into a coating film, a layer structure such as a sea island structure is formed rather than simply using a polyolefin resin and a polyurethane resin mixed in an organic solvent, so that it is inferred that the adhesiveness is excellent. As described above, the adhesion to the base material and the storage stability can be achieved at the same time.

Further, in the present invention, in addition to the above-mentioned storage stability, the storage stability may be further improved by coexisting an organic solvent selected from glycols or diols. It is considered that the organic solvent having a hydroxy group at both ends and an appropriate molecular weight stabilized by suppressing the aggregation between the pigment dispersant and the composite resin. In addition, bronzing of the ink surface at the time of coating may be suppressed. It is presumed that the organic solvent having a hydroxy group at both ends enters between the particles of the pigment dispersant and the composite resin, whereby hydrogen bonding occurs between the particles, and the particles are dried while being regularly oriented in the ink drying process, so that in the final coating film, the particles are uniformly aligned without gaps, and the irregular reflection to the light on the surface of the coating film becomes constant, whereby the effect of suppressing the bronzing is produced.

### Brief Description of the Drawings

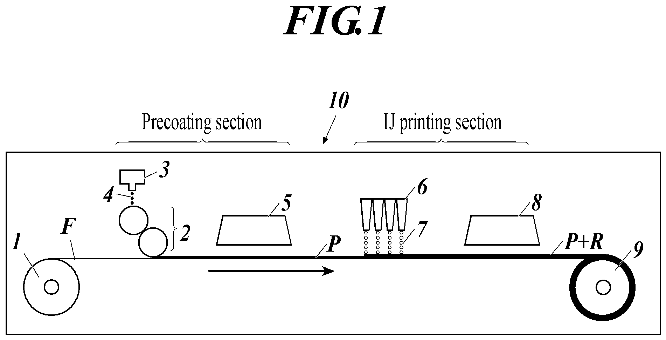

FIG. 1 is a schematic diagram indicating an example of an inkjet recording apparatus preferable for the present invention.

### Embodiments to carry out the Invention

The aqueous inkjet ink of the present invention is an aqueous inkjet ink containing water-insoluble resin particles, an organic solvent, a color material, and water, wherein the organic solvent contains an organic solvent selected from glycols or diols, and the water-insoluble resin particles contain a composite resin in which a polyolefin resin is contained in a polyurethane resin. This feature is a technical feature common to or corresponding to each of the following embodiments.

As an embodiment of the present invention, it is preferable that the water-insoluble resin particles contain a composite resin in which a polyolefin resin is emulsified in a polyurethane resin in terms of excellent adhesion with a base material and storage stability.

Further, it is preferable that the content of the water-insoluble resin particles is in the range of 2 to 10 mass% in terms of excellent adhesiveness to the base material and storage stability.

The value of the mass ratio (U/O) of the polyurethane resin (U) and the polyolefin resin (O) in the composite resin is preferably in the range of 40/60 to 95/5. Since the olefinic resin forms a non-polar site, it is preferable to use the above composite ratio because the stability is poor when the composition ratio of the olefinic resin is increased.

The content of the organic solvent is preferably in the range of 10 to 50 mass% in view of excellent storage stability and bronzing suppressing effect.

In addition, it is preferable that the organic solvent contains one of ethylene glycol, diethylene glycol, propylene glycol, 1,3-propanediol, 2-methyl-1,3-propanediol, 2,2-dimethyl-1,3-propanediol, 1,4-butanediol, 2-methyl-2,4-pentanediol, 3-methyl-1,5-pentanediol, and 1,6-hexanediol in terms of storage stability and bronzing suppressing effect.

The method for producing an aqueous inkjet ink of the present invention is characterized in comprising the steps of: forming composite resin particles by emulsifying and dispersing a polyolefin resin and a polyurethane resin; and mixing the composite resin particles, an organic solvent, a color material, and water. As a result, it is possible to provide an aqueous inkjet ink which is excellent in adhesiveness to a base material and storage stability and can suppress bronzing.

The printed material of the present invention is characterized by having a printed layer formed on a non-absorptive film substrate using the above-mentioned aqueous inkjet ink. According to the printed material, it is possible to obtain a printed material of high image quality which is excellent in adhesiveness to a base material and in which bronzing is suppressed.

The inkjet recording method of the present invention is characterized in that an image is recorded on a non- absorptive film substrate using the aqueous inkjet ink. According to the inkjet recording method, a high-quality printed material having excellent adhesion to a base material and suppressed bronzing can be obtained.

Hereinafter, the present invention, its constituent elements, and modes and modes for carrying out the present invention will be described. In the present application, "to" is used in the meaning that numerical values described before and after are included as a lower limit value and an upper limit value.

### [1] Aqueous inkjet ink

The aqueous inkjet ink of the present invention (hereinafter also referred to as "inkjet ink" or "ink") is an aqueous inkjet ink containing water-insoluble resin particles, an organic solvent, a color material, and water, wherein the organic solvent contains an organic solvent selected from glycols or diols, and the water-insoluble resin particles contain a composite resin in which a polyolefin resin is contained in a polyurethane resin.

### Water-insoluble resin particles

The water-insoluble resin particles according to the present invention contain a composite resin in which a polyolefin resin is contained in a polyurethane resin. In the present invention, the "state in which the olefinic resin is contained in the polyurethane resin" may take various forms, but the olefinic resin may be dispersed as a plurality of particles in the polyurethane resin, or the olefinic resin may form a core-shell structure in which the core is formed and the polyurethane resin is used as a shell. Note that an olefin resin may be contained so as to be partially exposed on the surface. In the present application, the water-insoluble resin particles containing the composite resin are also referred to as composite resin particles.

### [1.1.1] Polyolefin resin

Examples of the polyolefin resin may be modified polyolefins such as polyolefins modified with unsaturated carboxylic acids and/or acid anhydrides.

Examples of the polyolefin include polyethylene, polypropylene, ethylene-propylene copolymer, random copolymers or block copolymers of ethylene and/or propylene with other comonomers (a-olefin comonomers having 2 or more carbon atoms, preferably 2 to 6 carbon atoms such as 1-butene, 1-pentene, 1-hexene, 1-heptene, 1-octene, and 1-nonene) (e.g., ethylene-propylene-butene copolymers). Moreover, the substances obtained by co-polymerization of two or more types of these other comonomers may be used. In addition, two or more of these polymers may be used by mixing.

As the modified polyolefin, a polyolefin modified with an unsaturated carboxylic acid and/or an acid anhydride and/or a compound having one or more double bonds per molecule is preferably used.

Examples of an unsaturated carboxylic acid and an acid anhydride include α, β-unsaturated carboxylic acids and their anhydrides. Specific examples thereof are: maleic acid, maleic anhydride, fumaric acid, citraconic acid, citraconic anhydride, mesaconic acid, itaconic acid, itaconic anhydride, aconitic acid, and aconitic acid anhydride. These may be used alone or in combination of two or more. When two or more are used in combination, the physical properties of the coating often become good.

As the compound having one or more double bonds per one molecule, a (meth)acrylic acid monomer may be cited. Examples of the (meth)acrylic acid monomer are methyl (meth)acrylate, ethyl (meth)acrylate, propyl (meth)acrylate, butyl (meth)acrylate, 2-hydroxyethyl (meth)acrylate, 2-hydroxypropyl (meth)acrylate, 4-hydroxybutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, benzyl (meth)acrylate, glycidyl (meth)acrylate, (meth)acrylic acid, (di)ethylene glycol di(meth)acrylate, di (meth) acrylic acid 1,4-butanediol di(meth)acrylate, 1,6-hexanediol di(meth)acrylate, trimethylolpropane tri(meth)acrylate, glycerol di(meth)acrylate, 2-ethylhexyl (meth)acrylate, lauryl (meth)acrylate, stearyl (meth)acrylate, and stearyl acrylamide. A styrene monomer may be also cited. Examples of the styrene monomer are: styrene, α-methylstyrene, paramethylstyrene, and chloromethylstyrene. Other usable monomers include vinyl monomers such as divinyl benzene, vinyl acetate, and vinyl esters of versatic acid. Here, (meth)acrylic acid indicates acrylic acid and methacrylic acid.

Modification of the polyolefin is carried out by dissolving the polyolefin once in an organic solvent such as toluene or xylene, and in the presence of a radical generator, by reacting α,β-unsaturated carboxylic acid and/or its acid anhydride and/or a compound having one or more double bonds per molecule. Alternatively, in an autoclave which may be reacted in a molten state capable of raising the temperature to the softening temperature or melting point of the polyolefin or higher, or in a uniaxial or biaxial multiaxial extruder, in the presence or absence of a radical generator, modification may be carried out by reacting α,β-unsaturated carboxylic acid and/or its acid anhydride and/or a compound having one or more double bonds per molecule.

Examples of the radical generator used for the modification are peroxides such as di-tert-butyl perphthalate, tert-butyl hydroperoxide, dicumyl peroxide, benzoyl peroxide, tert-butyl peroxybenzoate, tert-butyl peroxyethyl hexanoate, tert-butyl peroxypivalate, methyl ethyl ketone peroxide, and di-tert-butyl peroxide; and azonitrile compounds such as azobisisobutyronitrile and azobisisopropionitrile. When graft copolymerization is carried out using these peroxides, the amount of peroxide is preferably in the range of 0.1 to 50 parts by mass, particularly preferably in the range of 0.5 to 30 parts by mass with respect to 100 parts by mass of the polyolefin.

The above-mentioned polyolefin resin as an emulsification raw material may be manufactured by a publicly known method, and there is no limitation in particular about each manufacturing method or modification degree.

The polyolefin resin used in the present invention preferably has a weight average molecular weight in the range of 20000 to 100000. When it is 20000 or more, the cohesion of the coating film becomes strong, and the coating film physical properties such as adhesion and solvent resistance (gasohol resistance) are improved. When it is 100000 or less, the solubility with respect to the organic solvent is good, and particle size reduction of the emulsified dispersion is promoted. The weight average molecular weight is a value measured by gel permeation chromatography (GPC). For example, by using "RID-6A" manufactured by Shimadzu Corporation (column: Tosoh Corporation "TSK-GEL", solvent: tetrahydrofuran (THF) and column temperature: 40 °C), it may be determined from a calibration curve prepared with polystyrene standard samples.

In the present invention, commercially available polyolefin resins may also be used. As resin particles made of resin having polyolefin structure, the following may be used: "AUROREN 150A" (polyolefin resin particles), "SUPERCHLON E-415" (polypropylene resin particles), and "AUROREN AE-301" (polyolefin resin particles) (made by Nippon Paper Industries Co., Ltd.); and "HARDLEN Na-1001" (made by Toyo Kasei Co., Ltd.).

### [1.1.2] Polyurethane resin

As a polyurethane resin (U), a substance having a hydrophilic group is used. By introducing a hydrophilic group, the function as an emulsifier for a polyolefin resin may be imparted to the polyurethane resin, and composite resin particles that are an emulsified dispersion of the polyolefin resin may be obtained.

As such a hydrophilic group, a carboxy group (-COOH) and a salt thereof, and a sulfonic acid group (-SO₃H) and a salt thereof may be mentioned. Examples of the salt include alkali metal salts such as sodium salt and potassium salt, and amine salts. Among these, as a hydrophilic group, a carboxy group or a salt thereof is preferable.

The polyurethane resin that may be used for the composite resin particles according to the present invention is preferably an aqueous dispersion in which a self-emulsifying polyurethane having a water-soluble functional group is dispersed in the molecule, or an aqueous dispersion of forced emulsification type polyurethane prepared by emulsifying with a strong mechanical shear force using a surfactant. The polyurethane resin in the aqueous dispersion is obtained by the reaction of a polyol with an organic polyisocyanate and a hydrophilic group-containing compound.

Examples of a polyol which may be used for preparation of polyurethane resin aqueous dispersion are polyester polyol, polyether polyol, polycarbonate polyol, and polyolefin type polyol. Among them, it is preferable to use a polyether polyol or a polycarbonate polyol to form a structure having a carbonate group or an ether group in a urethane resin.

Polyester polyols include condensation products made of low molecular weight polyols and polycarboxylic acids. Examples of the low molecular weight polyol are ethylene glycol, diethylene glycol, triethylene glycol, 1,2-propylene glycol, 1,3-propylene glycol, neopentyl glycol, 1,3-butanediol, 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexane dimethanol. Examples of the polycarboxylic acid are succinic acid, glutaric acid, adipic acid, sebacic acid, phthalic acid, isophthalic acid, terephthalic acid, trimellitic acid, tetrahydrofuranic acid, endomethine tetrahydrofuranic acid, and hexahydrophthalic acid.

As polyether polyols, various polyether polyols may be mentioned. Examples of the polyether polyol are polyethylene glycol, polypropylene glycol, polyethylene polytetramethylene glycol, polypropylene polytetremethylene glycol, and polytetramethylene glycol.

The polycarbonate polyol may be obtained, for example, by the reaction of a carbonic acid derivative such as diphenyl carbonate, dimethyl carbonate or phosgene with a diol. Examples of the diol are ethylene glycol, diethylene glycol, triethylene glycol, 1,2--propylene glycol, 1,3-propylene glycol, neopentyl glycol, 1,3-butanediol, 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexane dimethanol. Among these, polycarbonate polyols using 1,6-hexanediol are preferable from the viewpoint of weatherability and solvent resistance.

As the organic polyisocyanate, those known in the field of urethane industry may be used. Examples thereof are aromatic isocyanates such as tolylene diisocyanate (TDI), diphenylmethane diisocyanate (MDI), polymeric (MDI), xylylene diisocyanate (XDI), and tetramethyl xylylene diisocyanate (TMXDI); aliphatic isocyanate such as hexamethylene diisocyanate (HMDI); alicyclic isocyanates such as isophorone diisocyanate (IPDI), and 4,4'-dicyclohexylmethane diisocyanate (hydrogenated MDI, H12 MDI). Among these, it is preferable to use aliphatic isocyanate and/or alicyclic isocyanate. When non-yellowing is required, it is preferable to use HMDI for aliphatic isocyanates, IPDI and H12MDI for alicyclic isocyanates, and XDI and TMXDI for aromatic isocyanates.

As a hydrophilic group containing compound, the compound which has one or more active hydrogen atoms and the said hydrophilic group in a molecule is mentioned. Examples thereof are: compounds containing a carboxylic group such as 2,2-dimethylol propionic acid, 2,2-dimethylol butanoic acid, 2,2-dimethylol butyric acid, 2,2-dimethylol valeric acid, and glycine, and their derivatives of sodium salts, potassium salts, and amine salts; compounds containing a sulfonic acid group such as taurine (i. e., aminoethyl sulfonic acid), and ethoxypolyethylene glycol sulfonic acid, and their derivatives of sodium salts, potassium salts, and amine salts.

The polyurethane resin according to the present invention may be produced as follows. Firstly, a urethane prepolymer is obtained by mixing a polyol, an organic polyisocyanate and a hydrophilic group-containing compound and reacting them at 30 to 130 °C for 30 minutes to 50 hours by a known method.

The obtained urethane prepolymer is extended and polymerized by a chain extender to obtain a polyurethane resin having a hydrophilic group. As a chain extender, water and/or an amine compound is preferably used. By using water or an amine as a chain extender, the isocyanate-terminated prepolymer may be efficiently elongated by reacting with a free isocyanate in a short time.

The amines as a chain extender include polyamines. Examples of polyamines are: aliphatic polyamines such as ethylenediamine and triethylenediamine; aromatic polyamines such as meta xylene diamine and toluylene diamine; hydrazine; and polyhydrazino compound such as adipic acid dihydrazide. The amine may contain, together with the above-mentioned polyamine, a monovalent amine such as dibutylamine or methyl ethyl ketoxime as a reaction terminator to such an extent that polymerization is not significantly inhibited.

In the synthesis of the urethane prepolymer, a solvent which is inert to isocyanate and which can dissolve the urethane prepolymer may be used. Examples of the solvent include dioxane, methyl ethyl ketone, dimethylformamide, tetrahydrofuran, N-methyl-2-pyrrolidone, toluene, and propylene glycol monomethyl ether acetate. It is preferable that these hydrophilic organic solvents used in the reaction step are finally removed.

In addition, in the synthesis of the urethane prepolymer, a catalyst may be added to accelerate the reaction. Examples thereof are amine catalysts (e.g., triethylamine, N-ethylmorpholine, and triethyldiamine), tin-based catalysts (e.g., dibutyltin dilaurate and dioctyltin dilaurate), and titanium-based catalysts (e.g., tetrabutyl titanate).

The molecular weight of the polyurethane resin is preferably as large as possible by introducing a branched structure or an internal cross-linking structure. The molecular weight is preferably in the range of 50,000 to 10,000,000. When the molecular weight is increased to be insoluble in the solvent, a coating film having excellent weather resistance and water resistance may be obtained.

In the present invention, a commercially available polyurethane resin can also be used, and for example, cationic or nonionic polyurethane resin particles may be preferably used.

Specific examples of cationic or nonionic polyurethane resin particles are given below. Examples of the cationic polyurethane resin particles include "Superflex 620" and "Superflex 650" ("Superflex" is a registered trademark of Dai-ichi Kogyo Seiyaku Co., Ltd.) and "Permarine UC-20" ("Permarine" is a registered trademark of Sanyo Chemical Industries, Ltd.), and "Parasurf UP-22" made by Ohara Palladium Chemical Co., Ltd. Examples of the nonionic polyurethane resin particles include "Superflex 500M" and "Superflex E-200" made by Dai-ichi Kogyo Seiyaku Co., Ltd.

### [1.1.3] Composite resin particles

The composite resin particle according to the present invention contains a composite resin in which a polyolefin resin is contained in a polyurethane resin. Preferably, the composite resin particle according to the present invention is obtained by emulsifying a polyolefin resin with a polyurethane resin having the above hydrophilic group to form a composite resin. That is, in the composite resin particle, the polyurethane resin exists at the interface between the polyolefin resin as the water-insoluble resin and water as the continuous phase, and functions as a water-insoluble resin layer different from the resin for protecting the water-insoluble resin. The composite resin particles obtained by emulsifying the polyolefin resin with the polyurethane resin can suppress a decrease in compatibility with the polyurethane resin, the organic solvent, the pigment dispersant, and the surfactant, and can improve coating film physical properties as compared with the case where the polyolefin resin and the polyurethane resin are emulsified and simply mixed. This is preferable in terms of adhesiveness to the base material and storage stability. The composite resin particles may be obtained by the manufacturing method (1) described later, or may be obtained by the manufacturing method (2).

The value of the mass ratio (U/O) of the polyurethane resin (U) and the polyolefin resin (O) in the composite resin is preferably in the range of 40/60 to 95/5. When the presence ratio of the polyurethane resin is within the above range, the compatibility with the dispersant tends to be improved, and the solvent resistance is also excellent. Further, when the presence ratio of the polyolefin resin is in the above range, the adhesion to the polyolefin film absorptive film substrate is excellent. In addition, since the olefinic resin has a non-polar site, the storage stability is also excellent when the presence ratio of the olefinic resin is within the upper range. A more preferable range of the presence ratio is (U/O) = 40/60 to 80/20.

The total resin concentration of the polyolefin resin and the polyurethane resin in the composite resin particles is not particularly limited, but is usually 5 mass% or more, preferably 10 to 70 mass%.

In emulsification, a surfactant may be used as an emulsifier together with the polyurethane resin. That is, the composite resin particles according to the present invention may further contain a surfactant as an emulsifier. The addition of the surfactant may further improve the storage stability of the composite resin particles.

As such a surfactant, it is preferable to use either or both of an anionic surfactant and a nonionic surfactant. It is preferable to blend these anionic surfactant and nonionic surfactant in the range of 1 to 20 parts by mass in total of both active agents with respect to 100 parts by mass of the total resin mass. When the amount is 20 parts by mass or less, water resistance and solvent resistance tend to be excellent.

The value of the blending mass ratio (X/Y) of the anionic surfactant (X) to the nonionic surfactant (Y) is preferably in the range of 100/0 to 50/50. By making the blending quantity of an anionic surfactant in this range, emulsifying ability and storage stability may be further improved.

Examples of the anionic surfactant include alkyl sulfate, polyoxyethylene alkyl ether sulfate, sulfosuccinate, alpha olefin sulfonate, N-acyl amino acid salt, carboxylate, and phosphoric acid ester. Among these, sulfosuccinate and alpha olefin sulfonate are favorable. The type of salt is not particularly limited, but a metal salt such as a sodium salt, a potassium salt, a magnesium salt, or a triethanolamine salt, is preferable.

Examples of the nonionic surfactant include polyoxyethylene alkyl ethers, polyoxyethylene alkylphenyl ethers, polyoxyethylene alkylamine ethers, polyoxyethylene fatty acid esters, sorbitan fatty acid esters, and sucrose fatty acid esters. Among these, polyoxyethylenealkyl ethers and polyoxyethylenealkylphenyl ethers are preferable.

In the composite resin particles according to the present invention, an antioxidant, a light-resistant agent, a plasticizer, a foaming agent, a thickener, a colorant, a flame retardant, other aqueous resin and various fillers may be added in an amount of not inhibiting the effect of the present invention. Antioxidants include, for example, solutions or emulsions of antioxidants such as hindered phenols or semicarbazides. Examples of the light-resistant agent include solutions or emulsions of light-resistant agents such as hindered amines (HALS), benzophenones, and benzotriazoles.

In addition, various crosslinking agents such as epoxy, carbodiimide, oxazolidine, blocked isocyanate, and isocyanate may be added to the composite resin particles according to the present invention in order to impart higher durability.

The method for producing the composite resin particles according to the present invention will be described.

The composite resin particles described above may be prepared by the following preparation method (I) or (II).
(I) A method in which a polyolefin resin is emulsified in water with a urethane prepolymer having a hydrophilic group, and then an amine as a chain extender or an aqueous solution thereof is added to chain-extend the urethane prepolymer (to obtain a high molecular weight compound).
(II) A method in which a urethane prepolymer having a hydrophilic group is emulsified in water, and further, an amine as a chain extender or an aqueous solution thereof is added to chain-extend the urethane prepolymer to prepare an aqueous dispersion of a polyurethane resin, and then a polyolefin resin is emulsified in the aqueous dispersion of polyurethane resin.

An embodiments according to the above preparation method of (I) will be described. In this method, first, a resin solution obtained by dissolving a polyolefin resin in a solvent and a solution of a urethane prepolymer having a hydrophilic group are mixed, and water is added to the mixture and stirred to emulsify the mixture.

Examples of the solvent include organic solvents such as hexane, isohexane, pentane, cyclohexane, methylcyclohexane, heptane, isooctane, methyl ethyl ketone, xylene, toluene and benzene, and solvents other than water such as carbon dioxide in a supercritical state. These may be used alone or in combination of two or more.

The emulsification method may be any method such as known forced emulsification method, phase inversion emulsification method, D-phase emulsification method, and gel emulsification method. The equipment used may be, for example, single stirring with a stirring blade, a disper, and a homogenizer. It is also possible to use combined stirring combining these, a sand mill, or a multi-screw extruder. In addition, the above-mentioned surfactant may be mixed together with the urethane prepolymer during the emulsification.

Then, after diluting the above-mentioned emulsion with water, an amine as a chain extender is added, and the remaining isocyanate group of the urethane prepolymer is crosslinked by the chain extender, and the polyurethane resin is polymerized. Thereafter, by distilling off the organic solvent, a composite resin particle dispersion (that is, a dispersion in which water-insoluble resin particles are dispersed) containing a polyolefin resin inside the polyurethane resin is obtained.

In the composite resin particle dispersion thus obtained, when the polyolefin resin is a modified polyolefin, the acid component introduced into the polymer may be neutralized by adding a basic substance. By ionizing the same portion by neutralization, the composite resin particle dispersion may further increase the stability because the polymer molecules are elongated and the entire system causes a viscosity increase. In this case, the desired pH may be adjusted by the addition amount of the basic substance.

The basic substance to be used is not particularly limited as long as it can neutralize the acid moiety in the polyolefin resin. Examples thereof are organic basic substances such as methylamine, ethylamine, propylamine, butylamine, hexylamine, octylamine, ethanolamine, propanolamine, dimethylamine, diethylamine, dipropylamine, dipropylamine, dibutylamine, dihexylamine, dioctylamine, diethanolamine, dipropanolamine, N-methyldiethanolamine, triethylamine, N,N-dimethylethanolamine, 2-dimethylamino-2-methyl-1-propanol, 2-amine-2-methyl-1-propanol, and morpholine; and inorganic basic substance such as an aqueous ammonia solution, sodium hydroxide, potassium hydroxide, sodium carbonate, sodium hydrogencarbonate, ammonium carbonate, and potassium carbonate. When these basic substances are used, the purpose of the present invention may often be achieved more effectively by using two or more types of basic substances in combination. In addition, when an amine is used as a basic substance, a tertiary amine is used so that it may not react with free isocyanate as what is added before making a urethane prepolymer chain-extend. On the other hand, when neutralizing modified polyolefin after chain extension, any of primary, secondary and tertiary amines may be used.

The amount of the basic substance used for neutralization varies depending on the degree of modification of the modified polyolefin, and it is preferably in the range of 0.1 to 10 parts by mass with respect to 100 parts by mass of the modified polyolefin. When the amount of the basic substance is 0.1 parts by mass or more, the pH becomes neutral, and as a result, the storage stability of the composite resin particle dispersion is improved. On the other hand, when the amount of the basic substance is 10 parts by mass or less, the storage stability of the composite resin particle dispersion is good, the basicity is not strong, and a large amount of hydrophilic substance is not introduced into the coating film. Thereby, water resistance is improved.

Next, an embodiment according to the preparation method (II) will be described. In this method, first, water is added to a solution of a urethane prepolymer having a hydrophilic group to emulsify. Then, an amine as a chain extender is added to the obtained emulsion, and the remaining isocyanate group of the urethane prepolymer is cross-linked with the chain extender to prepare an aqueous dispersion of a polymerized polyurethane resin.

Thereafter, a resin solution obtained by dissolving a polyolefin resin in a solvent and the aqueous dispersion of the polyurethane resin having a hydrophilic group obtained above are mixed. Thereby, the polyolefin resin is emulsified in the polyurethane resin having the hydrophilic group. Then, after diluting with water, the organic solvent is distilled off to obtain a composite resin particle dispersion (that is, a dispersion in which water-insoluble resin particles are dispersed) containing a polyolefin resin in the inside of the polyurethane resin.

The solvent and emulsify method in the method (II) are the same as in the method (I). In the method (II), when emulsifying the polyolefin resin, a surfactant may be mixed with the polyurethane resin. Further, in the obtained composite resin particle dispersion, the modified polyolefin may be neutralized by a basic substance in the same manner as in the above method (I).

The average particle diameter of the composite resin particles is not particularly limited, but it is preferably in the range of 10 to 500 nm, more preferably in the range of 10 to 300 nm, and still more preferably in the range of 10 to 200 nm. The average particle size may be measured by a commercially available particle size measuring instrument using a dynamic light scattering method or an electrophoresis method. The measurement by the dynamic light scattering method is simple, and the particle diameter range may be measured accurately.

Further, in the inkjet ink, it is preferable that the water-insoluble resin particles containing the composite resin are contained within the range of 2 to 10 mass% with respect to the total mass of the inkjet ink in terms of excellent adhesion with the base material and storage stability.

### Organic solvent

The organic solvent used in the inkjet ink of the present invention contains at least one organic solvent selected from glycols and diols.

Examples of the glycol include ethylene glycol, diethylene glycol, propylene glycol, triethylene glycol, tetraethylene glycol, polyethylene glycol having 5 or more ethylene oxide groups, dipropylene glycol, tripropylene glycol, polypropylene glycol having 4 or more propylene oxide groups, butylene glycol, and thiodiglycol. Examples of the diol include 1,3-propanediol, 2-methyl-1,3-propanediol, 2,2-dimethyl-1,3-propanediol, 1,4-butanediol, 2-methyl-2,4-pentanediol, 3-methyl-1,5-pentanediol, and 1,6-hexanediol.

In particular, as the organic solvent according to the present invention, it is preferable to contain at least one of ethylene glycol, diethylene glycol, propylene glycol, 1,3-propanediol, 2-methyl-1,3-propanediol, 2,2-dimethyl-1,3-propanediol, 1,4-butanediol, 2-methyl-2,4-pentanediol, 3-methyl-1,5-pentanediol, and 1,6-hexanediol from the viewpoint of excellent storage stability and bronzing suppressing effect.

As the organic solvent according to the present invention, other organic solvents other than the above-mentioned glycols and diols may be further used. As other organic solvents, water-soluble organic solvents are suitable, and for example, alcohols, amines, amides, glycol ethers, and 1,2-alkanediols having 4 or more carbon atoms, may be preferably exemplified.

Examples of the alcohol include methanol, ethanol, propanol, isopropanol, butanol, isobutanol, secondary butanol, and tertiary butanol. Examples of the amine include ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amides include formamide, N,N-dimethylformamide, and N,N-dimethylacetamide.

Examples of the glycol ether include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, and tripropylene glycol monomethyl ether.

Examples of the 1,2-alkanediol having 4 or more carbon atoms include 1,2-butanediol, 1,2-pentanediol, 1,2-hexanediol, and 1,2-heptanediol.

When the inkjet ink contains two or more kinds of organic solvents, the mass ratio of the glycols and diols to the mass of the entire organic solvent is preferably 50% or more.

The content of the organic solvent containing at least one organic solvent selected from glycols and diols with respect to the inkjet ink is preferably in the range of 10 to 50 mass% in view of excellent storage stability and bronzing suppressing effect.

### Color material

The color material included in the aqueous inkjet ink of the present invention may be a pigment or a dye. A pigment is preferable from the viewpoint of enhancing the rubbing resistance of the obtained image. As the pigment, an anionic dispersed pigment, for example, an anionic self-dispersible pigment or a pigment dispersed by an anionic polymeric dispersant may be used. In particular, a pigment dispersed by an anionic polymeric dispersant is suitable.

As the pigment, conventionally known pigments may be used without particular limitation, and, for example, organic pigments such as insoluble pigments and lake pigments, and inorganic pigments such as titanium oxide may be preferably used.

The insoluble pigment is not limited. Preferable examples of the insoluble pigment are azo, azomethine, methine, diphenylmethane, triphenylmethane, quinacridone, anthraquinone, perylene, indigo, quinophthalone, isoindolinone, isoindoline, azine, oxazine, thiazine, Dioxazine, thiazole, phthalocyanine, and diketopyrrolopyrrole pigments.

Specific organic pigments that may be preferably used include the following pigments.

Examples of a magenta or red pigment are C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48: 1, C. I. Pigment Red 53: 1, C. I. Pigment Red 57: 1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, and C. I. Pigment Violet 19.

Examples of an orange or yellow pigment are C. I. Pigment Orange 31, C. I. Pigment Orange 43, C. I. Pigment Yellow 12, C. I. Pigment Yellow 13, C. I. Pigment yellow 14, C. I. Pigment Yellow 15, C. I. Pigment Yellow 15: 3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155. In particular, in view of the balance of color tone and light resistance, C. I. Pigment Yellow 155 is preferred.

Examples of a green or cyan pigment are C. I. Pigment Blue 15, C. I. Pigment Blue 15: 2, C. I. Pigment Blue 15:3, C. I. Pigment Blue 16, C. I. Pigment Blue 60, and C. I. Pigment Green 7.

Examples of a black pigment are C. I. Pigment Black 1, C. I. Pigment Black 6, and C. I. Pigment Black 7.

### Dispersant

The pigment dispersant used to disperse the pigment is not particularly limited, and it is preferably a polymer dispersant having an anionic group, and those having a molecular weight in the range of 5,000 to 200,000 may be suitably used.

Examples of the polymer dispersant are styrene, styrene derivatives, vinyl naphthalene derivatives, acrylic acid, acrylic acid derivatives, maleic acid, maleic acid derivatives, itaconic acid, itaconic acid derivatives, fumaric acid, block copolymers having a structure derived from two or more monomers selected from fumaric acid derivatives, random copolymers and salts thereof, polyoxyalkylenes, and polyoxyalkylene alkyl ethers.

The polymer dispersant preferably has an acryloyl group, and is preferably neutralized with a neutralizing base and added. The neutralizing base is not particularly limited, and it is preferably an organic base such as ammonia, monoethanolamine, diethanolamine, triethanolamine or morpholine. In particular, when the pigment is titanium oxide, the titanium oxide is preferably dispersed by a polymer dispersant having an acryloyl group.

The addition amount of the polymer dispersant is preferably in the range of 10 to 100 mass%, and more preferably in the range of 10 to 40 mass% with respect to the pigment.

It is particularly preferred that the pigment is in the form of a so-called capsule pigment, in which the pigment is coated with the above-mentioned polymeric dispersant. Various known methods may be used to coat the pigment with the polymer dispersant. For example, a phase inversion emulsification method, an acid precipitation method, or a method of dispersing a pigment with a polymerizable surfactant is performed, then, supplying a monomer thereto, and coating while polymerizing may be preferably exemplified.

Particularly preferable method is a follows: a water-insoluble resin is dissolved in an organic solvent such as methyl ethyl ketone, and the acid group in the resin is partially or completely neutralized with a base; then, a pigment and ion-exchange water is added and the mixture is dispersed; thereafter, the organic solvent is removed and water is added according to necessity.

The average particle diameter of the pigment in the ink-jet ink in the dispersed state is preferably in the range of 50 to 200 nm. Thereby, the dispersion stability of the pigment may be improved, and the storage stability of the ink may be improved. The particle size of the pigment may be measured by a commercially available particle size measuring instrument using a dynamic light scattering method or an electrophoresis method. The measurement by the dynamic light scattering method is simple, and the particle diameter range may be measured accurately.

The pigment may be used after being dispersed with a disperser together with a dispersant and other necessary additives depending on the desired purposes.

As a dispersing machine, a ball mill, a sand mill, a line mill, and a high pressure homogenizer, which are conventionally known, may be used. Among them, dispersing the pigment by a sand mill is preferable because the particle size distribution becomes sharp. The material of the beads used for sand mill dispersion is not particularly limited, and it is preferably zirconia or zircon from the viewpoint of preventing formation of bead fragments and contamination of ionic components. Furthermore, the bead diameter is preferably in the range of 0.3 to 3 mm.

The content of the pigment in the inkjet ink is not particularly limited, and a range of 7 to 18 mass% is preferable for titanium oxide, and a range of 0.5 to 7 mass% is preferable for an organic pigment.

### Water

The water contained in the aqueous inkjet ink of the present invention is not particularly limited, and may be ion exchanged water, distilled water, or pure water.

### Other ingredient

The inkjet ink of the present invention may also contain a surfactant. As a result, it is possible to improve the ink ejection stability and to control the spread (dot diameter) of the liquid droplet landed on the recording medium.

The surface tension of the inkjet ink is preferably 35 mN/m or less, more preferably 30 mN/m or less.

The surfactant that can be used in the inkjet ink used in the present invention may be used without any particular limitation, but when the other components of the ink contain an anionic compound, a preferable ionic property of the surfactant is an anionic, a nonionic or a betaine type.

In the present invention, the surfactant preferably used are: a fluorine-based surfactant having a high ability to reduce static surface tension, an anionic surfactant such as dioctyl sulfosuccinate having a high ability to reduce dynamic surface tension, relatively low molecular weight polyoxyethylene nonionic surfactants such as alkyl ethers, polyoxyethylene alkylphenyl ethers, acetylene glycols, pluronic surfactants, and sorbitan derivatives. It is also preferable to use a combination of a fluorine-based surfactant and a surfactant having a high ability to reduce dynamic surface tension.

The content of the surfactant in the inkjet ink is not particularly limited, and it is preferably in the range of 0.1 to 5.0 mass%.

In the inkjet ink used in the present invention, in addition to those described above, according to the purpose of improving the ejection stability, print head and ink cartridge compatibility, storage stability, image storability, and other various performances, as necessary, various additives known in the art may be used. Examples thereof are: polysaccharides, viscosity modifiers, resistivity modifiers, film-forming agents, UV absorbers, antioxidants, anti-fading agents, anti-glare agents, and anti-rust agents. They are appropriately selected and used. Specific examples are: oil droplets made of such as liquid paraffin, dioctyl phthalate, tricresyl phosphate, and silicone oil; UV absorbers described in JP-A 57-74193, JP-A 57-87988, and JP-A 62-261476; antifading agents described in JP-A 57-74192, JP-A 57-87989, JP-A 60-72785, JP-A 61-146591, JP-A 1-95091 and JP-A 3-13376; fluorescent whitening agents described in JP-A 59-42993, JP-A 59-52689, JP-A 62-280069, JP-A 61-242871, and JP-A 4-219266.

### Physical properties

The viscosity of the inkjet ink used in the present invention having the above constitution is preferably in the range of 1 to 40 mPa·s at 25 °C, and more preferably in the range of 2 to 10 mPa·s.

### [2] Method for producing aqueous inkjet ink

The method for producing an aqueous inkjet ink of the present invention is characterized in that it comprises a step of forming composite resin particles by emulsifying and dispersing a polyolefin resin and a polyurethane resin, and a step of mixing the composite resin particles, an organic solvent, a color material, and water.

### Step of forming composite resin particles

In this step, the composite resin particles are prepared by the following method (I) or (II) as described above.
(I) A method in which a polyolefin resin is emulsified in water with a urethane prepolymer having a hydrophilic group, and then an amine as a chain extender or an aqueous solution thereof is added to chain-extend the urethane prepolymer (to obtain a high molecular weight compound).
(II) A method in which a urethane prepolymer having a hydrophilic group is emulsified in water, and further, an amine as a chain extender or an aqueous solution thereof is added to chain-extend the urethane prepolymer to prepare an aqueous dispersion of a polyurethane resin, and then a polyolefin resin is emulsified in the aqueous dispersion of polyurethane resin.

### Mixing step

In this step, the composite resin particles obtained in the above step, the organic solvent, the color material (pigment), and water are mixed under normal temperature or heating as necessary. Thereafter, it is preferable to filter the obtained mixture through a predetermined filter. At this time, a dispersion containing a pigment and a dispersant may be prepared in advance, and the remaining components may be added thereto and mixed.

### [3] Printed material

The printed material of the present invention is characterized by having a printed layer formed on a non-absorptive film substrate using the above-mentioned aqueous inkjet ink.

In the printed material of the present invention, an aqueous inkjet ink is ejected from an inkjet head onto a base material, and is applied and fixed to form a printed layer. Further, it is preferable that a pretreatment layer is formed on a base material by ejecting a pretreatment liquid for inkjet recording from an inkjet head in advance, and the printing layer is formed at a position where the pretreatment layer is applied and fixed.

In addition, another functional layer may be formed between the base material and the pretreatment layer, or a non-absorptive film substrate may be bonded to the upper layer of the printing layer through, for example, a laminate adhesive layer.

The "inkjet recording pretreatment liquid" in the present invention is one type of ink to be applied to a base material in advance, which has a function of accelerating image formation of ink or improving image quality when an image is recorded on the base material by an inkjet printing method. Specifically, the inkjet recording pretreatment liquid is an ink for fixing the ink at a position where the pretreatment liquid is applied to the recording medium so that the color ink forming the image does not bleed into the recording medium. It is preferable that the inkjet recording pretreatment liquid contains at least resin particles, a coagulant, and water.

### Base material

The base material is not particularly limited, and may be a paper base material having high water absorption, a base material having low water absorption such as coated paper for gravure or offset printing, or a non-water absorption base material such as film, plastic board (soft vinyl chloride, hard vinyl chloride, acrylic plate, polyolefin system, etc.), glass, tile, and rubber.

Among them, the base material having low water absorption and the base material having no water absorption are particularly preferably a film (referred to as a non-absorptive film substrate in the present invention). By applying the inkjet recording pretreatment liquid of the present invention to such a base material, the water-based ink can be sufficiently pinned to form a high-quality image with little bleeding.

Examples of such films include known plastic films. Specific examples of the plastic film described above are a polyester film such as polyethylene terephthalate (PET), a polyethylene (PE) film including a high density polyethylene film and a low density polyethylene film, a polypropylene (PP) film, a polyamide films such as nylon (NY), a polystyrene film, an ethylene-vinyl acetate copolymer (EVA) film, a polyvinyl chloride (PVC) film, a polyvinyl alcohol (PVA) film, a polyacrylic acid (PAA) film, a polycarbonate film, a polyacrylonitrile film, and a biodegradable film such as a polylactic acid film. Moreover, in order to provide a gas barrier property, a moisture proof property, and an odor retention property, the film may be coated with polyvinylidene chloride on a single surface or on both surfaces of the film, and the film may be vapor-deposited with metal oxide. In addition, the film may be subjected to antifogging treatment. In addition, the film may be subjected to corona discharge and ozone treatment.

The film may be either an un-stretched film or a stretched film.

The film may also be a multi-layered substrate in which a layer such as PVA coat is provided on the surface of an absorptive substrate such as paper to make the area to be recorded non-absorptive.

In addition, the effect of the present invention becomes remarkable when recording is performed on a non-water-absorbing film which has been subjected to anti-fogging processing, in which it is generally difficult to obtain the adhesiveness of the recording ink.

Generally, a film containing a surfactant is used as the film subjected to the anti-fogging process, and it is known that this surfactant adversely affects the adhesiveness of the recording ink. It is presumed that when the pretreatment liquid of the present invention is precoated on such a film, the surfactant is dissolved and diffused in the pretreatment liquid to suppress the surfactant from being oriented at a high concentration at the interface with the recording ink layer, and as a result, the adhesiveness is not hindered.

The effect of the present invention that transparency is hardly impaired when recording is performed on a recording medium having high transparency is remarkable.

The thickness of the film is preferably less than 250 µm.

### [4] Inkjet recording method

The inkjet recording method of the present invention is characterized in that an image is recorded on a non-absorptive film substrate using the aqueous inkjet ink.

In the inkjet recording method of the present invention, it is preferable that the surface of the non-absorptive film substrate is precoated with an inkjet recording pretreatment liquid in advance, and then an image is recorded with inkjet ink.

The method of precoating the pretreatment liquid is not particularly limited, but in order to obtain good adhesion of the recording inks, it is preferable that the amount of the composite resin particles contained in the pretreatment liquid is 0.3 g/m² or more, more preferably 0.8 g/m² or more, with respect to the recording medium. Although the application method of the pretreatment liquid on a film substrate is not particularly limited, for example, a wet application method such as a roller application method, a curtain application method, a spray application method, and an ink-jet printing method may be preferably mentioned.

The inkjet head that is used in the inkjet printing method suitable for the present invention may be an on-demand system or a continuous system. Further, as a discharge method, any discharge method such as an electro-mechanical conversion method (for example, single cavity type, double cavity type, bender type, piston type, shear mode type, and shared wall type), or an electro-thermal conversion method (for example, thermal in-jet, and a bubble jet (registered trademark)) may be used.

In particular, an ink-jet head (also referred to as a piezo ink-jet head) using a piezoelectric element as the electro-mechanical conversion element used in the electro-mechanical conversion system is preferable.

In view of the fact that many common substrates are distributed in the form of rolls, it is preferable to use a single-pass inkjet recording method. The effect of the present invention is particularly remarkable in the single-pass ink-jet recording method. That is, when using the single-pass inkjet recording method, high-definition images may be formed.

In the single-pass inkjet recording method, when the substrate passes under one inkjet head unit, ink droplets are applied to all the pixels on which dots are to be formed in one pass.

It is preferable to use a line head type inkjet head as a means for achieving the single pass type inkjet recording method.

The line head type ink-jet head refers to an ink-jet head having a length equal to or greater than the width of the printing area. As the line head type ink-jet head, one head may be used that is equal to or more than the width of the printing range, or a plurality of heads may be combined to be equal to or more than the width of the printing range.

Further, it is also preferable to arrange a plurality of heads side by side so that the nozzles of each other are arranged in a staggered arrangement to increase the resolution of the heads as a whole.

The conveying speed of the recording medium may be set, for example, in the range of 1 to 120 m/min. The faster the conveying speed, the faster the image forming speed. According to the present invention, the occurrence of bleeding is further suppressed even at a very high linear velocity in the range of 50 to 120 m/min, which is applicable in the single-pass inkjet image forming method, and an image having high adhesion may be obtained.

After the application of the pretreatment liquid or the inkjet ink, the substrate may be dried. Drying may be performed by a known method such as infrared lamp drying, hot air drying, back heat drying, or reduced pressure drying. From the viewpoint of further improving the drying efficiency, it is preferable to dry the printed material by combining two or more of these drying methods.

Hereinafter, a preferable example of the inkjet recording method and the recording apparatus of the present invention will be described.

FIG. 1 is a schematic diagram of an inkjet recording apparatus 10 preferable in the present invention. However, the present invention is not limited to this, and for example, the first drying unit may be omitted.

A non-absorptive substrate F unwound from a feed roller is coated with pretreatment droplets 4 discharged from a nozzle 3 by a roll coater 2 to form a pretreatment layer P. At this time, the pretreatment layer P is dried by the first drying unit. Next, an ink droplet 7 ejected from the inkjet head 6 is printed on the pretreatment layer P, an ink printing layer R is formed, and is wound by a winding roller 9 after drying by a second drying unit 8.

### Examples

Hereinafter, the present invention will be described in detail with reference to examples, but the present invention is not limited thereto. In the examples, "parts" or "%" is used, but unless otherwise specified, it indicates "parts by mass" or "mass%".

### [Example 1]

### <Synthesis of Urethane prepolymer solution A-1>

Into a four-necked flask equipped with a stirrer, reflux condenser, thermometer and nitrogen bubbler, 182.0 parts by mass of polycarbonate polyol (molecular weight 1000, trade name Nippolan 981, Nippon Polyurethane Industries Co., Ltd.), 22.0 parts by mass of polyethylene glycol (PEG, molecular weight 600, trade name PEG 600, Daiichi Kogyo Seiyaku Co., Ltd.), 5.6 parts by mass of trimethylol propane, 43.8 parts by mass of N-methyl-N,N-diethanolamine, 204 parts by mass of 4,4'-dicyclohexylmethane diisocyanate, and 216 parts by mass of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer. Then, 46.4 parts by mass of dimethyl sulfate was added to this urethane prepolymer, and the mixture was reacted at 50 to 60 °C for 30 to 60 minutes. Thus, a methyl ethyl ketone solution A-1 of a cationic urethane prepolymer having an NCO content of 2.2% and a nonvolatile content of about 50 mass% was obtained.

### <Preparation of Composite resin particle dispersion B-1>

Into a four-necked flask equipped with a stirrer, reflux condenser, thermometer and nitrogen bubbler, 80.0 parts by mass of polyolefin resin (trade name: AUROREN 150S, manufactured by Nippon Paper Industries Co., Ltd.), 240.0 parts by mass of methylcyclohexane, and 48.0 parts by mass of methyl ethyl ketone were loaded. The temperature of the mixture was raised to 80 °C and dissolved by heating. After dissolution, the internal temperature was kept at 40 °C, and 40.0 parts by mass of a urethane prepolymer solution A-1 (nonvolatile content: about 50%) was added and mixed. 58.0 parts by mass of water was added to this solution and emulsified using a homogenizer. Thereafter, 570 parts by mass of water was gradually added and diluted, and an aqueous solution in which 1.0 parts by mass of ethylene diamine and 12 parts by mass of water were mixed was gradually added thereto, and the mixture was stirred for 1 hour to perform polymerization. The solvent was removed under reduced pressure at 50 °C to obtain a composite resin particle dispersion B-1 having a nonvolatile content (solid content as particles) of about 30 mass%.

### <Preparation of Aqueous inkjet ink 1>

A mixed liquid containing 18 mass% of pigment (pigment blue 15:3), 31.5 mass% of pigment dispersant (acrylic dispersant having a carboxy group neutralized with sodium hydroxide, Joncryl 819 manufactured by BASF Co., acid valence 75 mgKOH/g, solid content 20 mass%), 20 mass% of ethylene glycol, and ion exchange water (remaining amount; total amount becomes 100 mass%) was premixed. Thereafter, the mixed liquid was dispersed by using a sand grinder filled with 0.5 mm zirconia beads in an amount of 50% volume ratio. A pigment dispersion liquid having a pigment content of 18 mass% was prepared. The average particle diameter of the pigment particles contained in this pigment dispersion liquid was 109 nm. The average particle diameter was measured by a "Zetasizer 1000HS" manufactured by Malvern Corporation. To 10.0 parts by mass of the above pigment dispersion, 3.3 parts by mass of the composite resin particle dispersion B-1, 5.0 parts by mass of organic solvents (triethylene glycol), 1.0 part by mass of a surfactant (Orphine E1010, "Orphine" is a registered trademark of Nisshin Chemical Co., Ltd.) and ion-exchanged water (residual amount: 80.7 parts by mass) were added while stirring. The obtained mixed liquid was filtered through a 1 µm filter to obtain an aqueous inkjet ink 1. There was no substantial change in composition before and after filtration.

### <Preparation of Aqueous inkjet inks 2-20, and 25-27>

In the preparation of the composite resin particle dispersion B-1, the mass ratio of the polyolefin resin and the urethane prepolymer solution A-1 was changed as indicated in Table I to obtain each composite resin particle dispersion. Aqueous inkjet inks 2 to 20 and 25 to 27 were obtained in the same manner as the preparation of the above-mentioned aqueous inkjet ink 1 except that the type of the composite resin particle dispersion and the organic solvent, and the mass parts of each ink component (composite resin particle dispersion, organic solvent, pigment dispersion, surfactant, and water) were changed as indicated in Table I and Table II below.

### <Preparation of Aqueous inkjet ink 21>

A polyester urethane resin emulsion (resin particle dispersion C-1) having a polyolefin structure was obtained by synthesizing in the same manner as described in Synthesis Example 1 of JP-A 2017-75291 (see paragraph [0067] in the description). An aqueous inkjet ink 21 was obtained in the same manner as the preparation of the aqueous inkjet ink 1 except that the resin particle dispersion C-1 was used instead of the composite resin particle dispersion A-1 and the types and mass parts of the other ink components were changed as indicated in Table II below.

### <Preparation of Aqueous inkjet ink 22>

A polyester resin particle (composite resin particle dispersion C-2) having a polyolefin structure was obtained by synthesizing with the same method as described in Production Example 5 of JP-A 2016-196619 (see paragraph [0110] in the description). An aqueous inkjet ink 22 was obtained in the same manner as the preparation of the aqueous inkjet ink 1 except that the composite resin particle dispersion C-2 was used instead of the composite resin particle dispersion A-1 and the other ink components were changed as indicated in Table II below.

### <Preparation of Aqueous inkjet ink 23>

An aqueous inkjet ink 23 was obtained in the same manner as the preparation of the aqueous inkjet ink 1 except that the following change was done. Instead of the composite resin particle dispersion A-1, mixed resin particles obtained by mixing 8.35 parts by mass of WBR-016U (manufactured by Taisei Fine Chemical Co., Ltd.) and 8.35 parts by mass of HARDLEN EH-801 (manufactured by Toyobo Co., Ltd.) were used. Other ink components were changed as indicated in Table II below.

### <Preparation of Aqueous inkjet ink 24>

An aqueous inkjet ink 24 was obtained in the same manner as the preparation of the aqueous inkjet ink 1 except that the following change was done. Instead of the composite resin particle dispersion A-1, mixed resin particles obtained by mixing 8.35 parts by mass of WBR-2101 (manufactured by Taisei Fine Chemical Co., Ltd.) and 8.35 parts by mass of HARDLEN NZ-1004 (manufactured by Toyobo Co., Ltd.) were used. Other ink components were changed as shown in Table II below.

### <Evaluation>

### (Inkjet recording method)

Two independent drive heads of a piezo-type inkjet head (360 dpi, ejection volume of 14 pL, manufactured by Konica Minolta, Inc.) were arranged so that the nozzles were alternately arranged. A head module of 720 dpi x 720 dpi was produced, and the nozzle rows were installed on the stage conveyer so as to be orthogonal to the conveyance direction. The inkjet recording apparatus was configured such that the head module of the inkjet recording apparatus was filled with the aqueous inkjet ink obtained as described above, and a solid image was recorded on the coating film of the film substrate conveyed by the stage conveyer in a single pass method. Polyethylene film (PE film) Taiyo FE #50-FE2001 (manufactured by Futamura Chemical Co., Ltd.) was used as the base material. On the corona-treated surface of the above base material, the precoat liquid was coated with a #3 wire bar and dried, and then droplets of the aqueous inkjet ink 1 were discharged by using an independent drive head of a piezo-type inkjet head (360 dpi, discharge amount 14 pL, manufactured by Konica Minolta, Inc.) so that a solid image of 720 dpi x 720 dpi having an ink coverage of 11.2 cc/m² was formed.

### (Adhesiveness)

In the solid image of the image thus formed, a tape peeling test was performed by a cross-cutting method in which the image was cut with a cutter in a grid pattern of 5 x 5 at intervals of 1 mm, and the results were evaluated according to the following criteria.
AA: Good without peeling off by tape
BB: Although 1 to 3 grid cuts are peeled off, it is at a good level.
CC: Although 4 to 6 grid cuts are peeled off, the level is acceptable for practical use.
DD: 7 or more grid cuts are peeled off at a practically unacceptable level.

### (Storage stability)

After thermal-storing the above-prepared inkjet ink at 60 °C for one week, the average particle diameter was measured using a "Zetasizer 1000HS" manufactured by Malvern Corporation. The particle size increase rate was calculated from the obtained average particle size after storage and the average particle size before storage, and evaluated based on the following criteria.
AA: Increase in average particle size of less than 120%
BB: Increase in average particle size of 120% or more and less than 140%
CC: Increase in average particle size of 140% or more and less than 160%
DD: Increase in average particle size of 160% or more

### (Bronzing)

After printing and drying, the solid image of the image thus formed was visually observed under a fluorescent lamp, and bronzing was evaluated according to the following criteria.
AA: The reflected light of the fluorescent lamp reproduces white.
BB: The level at which the reflected fluorescent light is slightly colored but difficult to recognize.
CC: The reflected fluorescent light is reddish and readily recognizable.
DD: The reflected light of the fluorescent lamp has a strong reddish tinge.

**Table I**

| The unit for "Compos sition" and "Water" is "part by mass" . | | | | | | | | | | | | ∗1: Bronzing *2: Present i nvention | | | |
|---|---|---|---|---|---|---|---|---|---|---|---|---|---|---|---|
| Ink No. | Aqueous inkjet ink composition | | | | | | | | | | | Evaluation | | | Remarks |
| | Resin particle (composite resin particle) dispersion | | | | | Organic solvent | | Pigment dispersion liquid | Surfactant | | Water | Adhesiveness | Storage stability | ∗1 | |
| | Urethane resin (U) | Polyolefin resin (0) | Emulsifying dispersion (U/0) | Composition | Content (mass%) | Kind | Composition | Composition | Kind | Composition | | | | | |
| 1 | A-1 | 150S | 20/80 | 3.3 | 1 | Triethylene glycol | 5.0 | 10.0 | E1010 | 1.0 | 80.7 | CC | CC | CC | *2 |
| 2 | A-1 | 150S | 20/80 | 3.3 | 1 | 1,2-Hexanediol | 55.0 | 10.0 | E1010 | 1.0 | 30.7 | CC | CC | CC | *2 |
| 3 | A-1 | 150S | 30/70 | 50.0 | 15 | Tripropylene glycol | 5.0 | 10.0 | E1010 | 1.0 | 34.0 | BB | CC | CC | *2 |
| 4 | A-1 | 150S | 30/70 | 50.0 | 15 | 1,2-Butanediol | 5.0 | 10.0 | E1010 | 1.0 | 34.0 | BB | CC | CC | *2 |
| 5 | A-1 | 150S | 40/60 | 6.7 | 2 | Triethylene glycol | 5.0 | 10.0 | E1010 | 1.0 | 77.3 | BB | BB | CC | *2 |
| 6 | A-1 | 150S | 40/60 | 6.7 | 2 | 1,2-Hexanediol | 55.0 | 10.0 | E1010 | 1.0 | 27.3 | BB | BB | CC | *2 |
| 7 | A-1 | 150S | 98/ 2 | 33.3 | 10 | Tripropylene glycol | 5.0 | 10.0 | E1010 | 1.0 | 50.7 | AA | CC | CC | *2 |
| 8 | A-1 | 150S | 98/ 2 | 33.3 | 10 | 1,2-Butanediol | 55.0 | 10.0 | E1010 | 1.0 | 0.7 | AA | CC | CC | *2 |
| 9 | A-1 | 150S | 50/50 | 16.7 | 5 | Triethylene glycol | 5.0 | 10.0 | E1010 | 1.0 | 67.3 | AA | BB | CC | *2 |
| 10 | A-1 | 150S | 60/40 | 16.7 | 5 | 1,2-Hexanediol | 5.0 | 10.0 | E1010 | 1.0 | 67.3 | AA | BB | CC | *2 |
| 11 | A-1 | 150S | 70/30 | 16.7 | 5 | Triethylene glycol | 55.0 | 10.0 | E1010 | 1.0 | 17.3 | AA | BB | CC | *2 |
| 12 | A-1 | 150S | 80/20 | 16.7 | 5 | 1,2-Hexanediol | 55.0 | 10.0 | E1010 | 1.0 | 17.3 | AA | BB | CC | *2 |
| 13 | A-1 | 150S | 90/10 | 16.7 | 5 | Tripropylene glycol | 55.0 | 10.0 | E1010 | 1.0 | 17.3 | AA | BB | CC | *2 |
| 14 | A-1 | 150S | 70/30 | 16.7 | 5 | 1,2-Hexanediol | 20.0 | 10.0 | E1010 | 1.0 | 52.3 | AA | AA | BB | *2 |
| 15 | A-1 | 150S | 80/20 | 16.7 | 5 | 1,2-Butanediol | 20.0 | 10.0 | E1010 | 1.0 | 52.3 | AA | AA | BB | *2 |
| 16 | A-1 | 150S | 90/10 | 16.7 | 5 | Tripropylene glycol | 30.0 | 10.0 | E1010 | 1.0 | 42.3 | AA | AA | BB | *2 |
| 17 | A-1 | 150S | 60/40 | 16.7 | 5 | Ethylene glycol | 25.0 | 10.0 | E1010 | 1.0 | 47.3 | AA | AA | AA | *2 |
| 18 | A-1 | 150S | 70/30 | 16.7 | 5 | Propylene glycol | 40.0 | 10.0 | E1010 | 1.0 | 32.3 | AA | AA | AA | *2 |
| 19 | A-1 | 150S | 80/20 | 16.7 | 5 | 1,3-Propanediol | 30.0 | 10.0 | E1010 | 1.0 | 42.3 | AA | AA | AA | *2 |
| 20 | A-1 | 150S | 90/10 | 16.7 | 5 | 1,4-Butanediol | 35.0 | 10.0 | E1010 | 1.0 | 37.3 | AA | AA | AA | *2 |

**Table II**

| The unit for "Composition" and "Water" is "part by mass" . | | | | | | | | | | | *1: Bronzing *3: Comparative example | | | | |
|---|---|---|---|---|---|---|---|---|---|---|---|---|---|---|---|
| Ink No. | Aqueous inkjet ink composition | | | | | | | | | | | Evaluation | | | Remarks |
| | Resin particle (composite resin particle) dispersion | | | | | Organic solvent | | Pigment dispersion liquid | | Surfactant | Water | Adhesiveness | Storage stability | ∗1 | |
| | Urethane resin (U) | Polyolefin resin (0) | Emulsifying dispersion (U/0) | Composition | Content (mass%) | Kind | Composition | Composition | Kind | Composition | | | | | |
| 21 | C-1 | | - | 16.7 | 5 | Triethylene glycol | 20.0 | 10.0 | E1010 | 1.0 | 52.3 | BB | CC | DD | *3 |
| 22 | C-2 | | - | 16.7 | 5 | 1,2-Hexanediol | 20.0 | 10.0 | E1010 | 1.0 | 52.3 | BB | CC | DD | *3 |
| 23 | WBR-016U | | - | 8.35 | 5 | Triethylene glycol | 20.0 | 10,0 | E1010 | 1.0 | 52.3 | BB | DD | CC | *3 |
| | EH-801 | | | 8.35 | | | | | | | | | | | |
| 24 | WBR-2101 | | - | 8.35 | 5 | 1,2-Hexanediol | 20.0 | 10.0 | E1010 | 1.0 | 52.3 | BB | DD | CC | *3 |
| | NZ-1004 | | | 8.35 | | | | | | | | | | | |
| 25 | A-1 | 150S | 70/30 | 16.7 | 5 | Dipropylene glycol monoethyl ether | 20.0 | 10.0 | E1010 | 1.0 | 52.3 | BB | CC | DD | *3 |
| 26 | A-1 | 150S | 80/20 | 16.7 | 5 | 1-Methoxy-2-propanol | 20.0 | 10.0 | E1010 | 1.0 | 52.3 | BB | CC | DD | *3 |
| 27 | A-1 | 150S | 90/10 | 16.7 | 5 | Ethylene glycol monomethyl ether acetate | 20.0 | 10.0 | E1010 | 1.0 | 52.3 | BB | CC | DD | *3 |

In Table I and Table II, "Content" represents the content (mass%) of resin particles with respect to the entire ink. Specifically, in the ink 1, when 3.3 parts by mass of the composite resin particle dispersion A-1 is used in the composite resin particle dispersion F-1 having a solid content of about 30 mass% as a particle, it means that the content of the resin particles is 1 mass% with respect to the entire ink. All of the inks 1 to 21 have a solid content of about 30 mass%.

As shown in the above results, it is recognized that the ink of the present invention is superior to the ink of the comparative example in storage stability, excellent in adhesion to the base material, and excellent in bronzing suppressing effect.

### [Example 2]

In the same manner as in Example 1, the evaluation of adhesion and bronzing to the substrate were evaluated by using the following film substrates instead of non-absorptive PE film. The used film substrates were OPP-1: biaxially oriented polypropylene film (AF-642, 20 µm thick, double-sided corona treatment, with anti-fogging treatment on both sides, made by Futamura Chemical Co., Ltd.), OPP-2: biaxially oriented polypropylene film (FOS-BT, 30 µm thick, and double-sided corona treatment, without anti-fogging treatment, manufactured by Futamura Chemical Co., Ltd.), PET: biaxially oriented polyester film (E-5200, 25 µm thick, double-sided corona treatment, without anti-fogging treatment, manufactured by Toyobo Corporation), and printed coated paper: cast coated paper (mirror coated platinum, a basis weight 157 g/m²). When the ink of the present invention was used, it was confirmed that the ink of the present invention was excellent in both of the adhesiveness and the effect of suppressing bronzing as compared with the ink of the comparative example.

### [Example 3]

Instead of the polyolefin resin (AUROREN 150S, manufactured by Nippon Paper Industries Co., Ltd.) used in Inks 1-20 and 25-27 prepared in Example 1, polyolefin resin: HARDLEN Na-1001 (manufactured by Toyo Kasei Co., Ltd.) or SUPERCHLON E-415 (manufactured by Nippon Paper Industries Co., Ltd.) was used to prepare composite resin particle dispersions in which the polyolefin resin was emulsified in the polyurethane resin, similarly to Inks 1-20 and 25-27. The obtained inks corresponding to the above-mentioned inks 1 to 20 were superior in storage stability to the inks corresponding to the inks 25 to 27. In addition, it was confirmed that the image formed by applying the inks corresponding to the obtained inks 1 to 20 to the non-absorptive base material (PE film) had better adhesion to the base material and superior bronzing suppression effect as compared with the case where the inks corresponding to the obtained inks 25 to 27 were used.

### [Example 4]

Instead of the urethane polymer solution A-1 used in the inks 1 to 20 and 25 to 27 prepared in Example 1, the following urethane polymer solution A-2 or A-3 was used to prepare a composite resin particle dispersion in which a polyolefin resin was emulsified in a polyurethane resin in the same manner as in the inks 1 to 20 and 25 to 27, respectively. The obtained inks corresponding to the above-mentioned inks 1 to 20 were superior in storage stability to the inks corresponding to the inks 25 to 27. In addition, it was confirmed that the image formed by applying the inks corresponding to the obtained inks 1 to 20 to the non-absorptive base material (PE film) had better adhesion to the base material and superior bronzing suppression effect as compared with the case where the inks corresponding to the obtained inks 25 to 27 were used.

### <Synthesis of Urethane prepolymer solution A-2>

Into a four-necked flask equipped with a stirrer, reflux condenser, thermometer and nitrogen bubbler, 182.0 parts by mass of polyester polyol (trade name Teslac 2461, manufactured by Hitachi Chemical Co., Ltd.), 22.0 parts by mass of polyethylene glycol (PEG, molecular weight 600, trade name PEG 600, Daiichi Kogyo Seiyaku Co., Ltd.), 5.6 parts by mass of trimethylol propane, 43.8 parts by mass of N-methyl-N,N-diethanolamine, 204 parts by mass of 4,4'-dicyclohexylmethane diisocyanate, and 216 parts by mass of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer.
Then, 46.4 parts by mass of dimethyl sulfate was added to this urethane prepolymer, and the mixture was reacted at 50 to 60 °C for 30 to 60 minutes. Thus, a methyl ethyl ketone solution A-2 of a cationic urethane prepolymer having an NCO content of 2.2% and a nonvolatile content of about 50 mass% was obtained.

### <Synthesis of Urethane prepolymer solution A-3>

Into a four-necked flask equipped with a stirrer, reflux condenser, thermometer and nitrogen bubbler, 182.0 parts by mass of polyether polyol (PolyTHF2000, BASF Corporation), 22.0 parts by mass of polyethylene glycol (PEG, molecular weight 600, trade name PEG 600, Daiichi Kogyo Seiyaku Co., Ltd.), 5.6 parts by mass of trimethylol propane, 43.8 parts by mass of N-methyl-N,N-diethanolamine, 204 parts by mass of 4,4'-dicyclohexylmethane diisocyanate, and 216 parts by mass of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer. Then, 46.4 parts by mass of dimethyl sulfate was added to this urethane prepolymer, and the mixture was reacted at 50 to 60 °C for 30 to 60 minutes. Thus, a methyl ethyl ketone solution A-3 of a cationic urethane prepolymer having an NCO content of 2.2% and a nonvolatile content of about 50 mass% was obtained.

### Industrial Applicability

The aqueous inkjet ink of the present invention can provide an aqueous inkjet ink, a method for producing an aqueous inkjet ink, a printed material, and an inkjet recording method, which are excellent in adhesiveness to a base material and storage stability and can suppress bronzing.

### Description of Symbols

- F:: Base material
- P:: Pretreatment layer
- R:: Printed layer
- 1:: Feed roller
- 2:: Roll coater
- 3:: Nozzle
- 4:: Pretreatment droplet
- 5:: First drying section
- 6:: Inkjet head
- 7:: Ink droplet
- 8:: Second drying section
- 9:: Take-up roller
- 10:: Inkjet recording apparatus

## Claims

1. An aqueous inkjet ink comprising water-insoluble resin particles, an organic solvent, a color material, and water, wherein the organic solvent contains an organic solvent selected from glycols or diols, and the water-insoluble resin particles contain a composite resin in which a polyolefin resin is contained in a polyurethane resin.

2. The aqueous inkjet ink described in claim 1, wherein the water-insoluble resin particles contain a composite resin in which a polyolefin resin is emulsified in a polyurethane resin.

3. The aqueous inkjet ink described in claim 1 or 2, wherein a content of the water-insoluble resin particles is in the range of 2 to 10 mass%.

4. The aqueous inkjet ink described in any one of claims 1 to 3, wherein a value of a mass ratio (U/O) of the polyurethane resin (U) and the polyolefin resin (O) in the composite resin particles is in the range of 40/60 to 95/5.

5. The aqueous inkjet ink described in any one of claims 1 to 4, wherein a content of the organic solvent is in the range of 10 to 50 mass%.

6. The aqueous ink jet ink described in any one of claims 1 to 5, wherein the organic solvent contains at least any one of ethylene glycol, diethylene glycol, propylene glycol, 1,3-propanediol, 2-methyl-1,3-propanediol, 2,2-dimethyl-1,3-propanediol, 1,4-butanediol, 2-methyl-2,4-pentanediol, 3-methyl-1,5-pentanediol, and 1,6-hexanediol.

7. A method of producing an aqueous inkjet ink described in any one of claims 1 to 6, comprising the steps of:
forming composite resin particles by emulsifying and dispersing a polyolefin resin and a polyurethane resin; and
mixing the composite resin particles, an organic solvent, a color material, and water.

8. A printed material comprising a printed layer formed on a non-absorptive film substrate using the aqueous inkjet ink described in any one of claims 1 to 6.

9. An inkjet recording method comprising the step of forming an image on a non- absorptive film substrate using the aqueous inkjet ink described in any one of claims 1 to 6.

## Patentansprüche

1. Wässrige Tintenstrahltinte, enthaltend wasserunlösliche Harzteilchen, ein organisches Lösungsmittel, ein Färbematerial und Wasser, worin das organische Lösungsmittel ein organisches Lösungsmittel enthält, ausgewählt aus Glycolen oder Diolen und die wasserunlöslichen Harzteilchen ein Verbundharz enthalten, worin ein Polyolefinharz in einem Polyurethanharz enthalten ist.

2. Wässrige Tintenstrahltinte nach Anspruch 1, worin die wasserunlöslichen Harzteilchen ein Verbundharz enthalten, worin ein Polyolefinharz in einem Polyurethanharz emulgiert ist.

3. Wässrige Tintenstrahltinte nach Anspruch 1 oder 2, worin ein Gehalt der wasserunlöslichen Harzteilchen im Bereich von 2 bis 10 Massen-% ist.

4. Wässrige Tintenstrahltinte nach einem der Ansprüche 1 bis 3, worin ein Wert eines Massenverhältnisses (U/O) des Polyurethanharzes (U) und des Polyolefinharzes (O) in den Verbundharzteilchen im Bereich von 40/60 bis 95/5 ist.

5. Wässrige Tintenstrahltinte nach einem der Ansprüche 1 bis 4, worin ein Gehalt des organischen Lösungsmittels im Bereich von 10 bis 50 Massen-% ist.

6. Wässrige Tintenstrahltinte nach einem der Ansprüche 1 bis 5, worin das organische Lösungsmittel zumindest eines von Ethylenglycol, Diethylenglycol, Propylenglycol, 1,3-Propandiol, 2-Methyl-1,3-propandiol, 2,2-Dimethyl-1,3-propandiol, 1,4-Butandiol, 2-Methyl-2,4-pentandiol, 3-Methyl-1,5-pentandiol und 1,6-Hexandiol enthält.

7. Verfahren zur Erzeugung einer wässrigen Tintenstrahltinte nach einem der Ansprüche 1 bis 6, enthaltend die Schritte:
Bilden von Verbundharzteilchen durch Emulgieren und Dispergieren eines Polyolefinharzes und eines Polyurethanharzes und
Mischen der Verbundharzteilchen, eines organischen Lösungsmittels, eines Färbematerials und Wasser.

8. Druckmaterial, enthaltend eine Druckschicht, gebildet auf einem nicht-absorptiven Filmsubstrat unter Verwendung der wässrigen Tintenstrahltinte nach einem der Ansprüche 1 bis 6.

9. Tintenstrahlaufzeichnungsverfahren, enthaltend den Schritt der Bildung eines Bildes auf einem nicht-absorptiven Filmsubstrat unter Verwendung der wässrigen Tintenstrahltinte, die in einem der Ansprüche 1 bis 6 beschrieben ist.

## Revendications

1. Encre aqueuse pour jet d'encre comprenant des particules de résine insolubles dans l'eau, un solvant organique, une matière colorante et de l'eau, dans laquelle le solvant organique contient un solvant organique choisi parmi les glycols ou les diols, et les particules de résine insolubles dans l'eau contiennent une résine composite dans laquelle une résine de polyoléfine est contenue dans une résine de polyuréthane.

2. Encre aqueuse pour jet d'encre décrite selon la revendication 1, dans laquelle les particules de résine insolubles dans l'eau contiennent une résine composite dans laquelle une résine de polyoléfine est émulsifiée dans une résine de polyuréthane.

3. Encre aqueuse pour jet d'encre décrite selon la revendication 1 ou 2, dans laquelle une teneur en particules de résine insolubles dans l'eau se situe dans la plage allant de 2 à 10 % en masse.

4. Encre aqueuse pour jet d'encre décrite selon l'une quelconque des revendications 1 à 3, dans laquelle une valeur d'un rapport massique (U/O) entre la résine de polyuréthane (U) et la résine de polyoléfine (O) dans les particules de résine composite se situe dans la plage allant de 40/60 à 95/5.

5. Encre aqueuse pour jet d'encre décrite selon l'une quelconque des revendications 1 à 4, dans laquelle une teneur en solvant organique se situe dans la plage allant de 10 à 50 % en masse.

6. Encre aqueuse pour jet d'encre décrite selon l'une quelconque des revendications 1 à 5, dans laquelle le solvant organique contient au moins l'un quelconque parmi l'éthylène-glycol, le diéthylène-glycol, le propylène-glycol, le 1,3-propanediol, le 2-méthyl-1,3-propanediol, le 2,2-diméthyl-1,3-propanediol, le 1,4-butanediol, le 2-méthyl-2,4-pentanediol, le 3-méthyl-1,5-pentanediol et le 1,6-hexanediol.

7. Procédé de production d'une encre aqueuse pour jet d'encre décrite selon l'une quelconque des revendications 1 à 6, comprenant les étapes consistant à :
former des particules de résine composite en émulsifiant et en dispersant une résine de polyoléfine et une résine de polyuréthanne ; et
mélanger les particules de résine composite, un solvant organique, une matière colorante et de l'eau.

8. Matériau imprimé comprenant une couche imprimée formée sur un substrat de film non absorbant en utilisant l'encre aqueuse pour jet d'encre décrite selon l'une quelconque des revendications 1 à 6.

9. Procédé d'enregistrement par jet d'encre comprenant l'étape de formation d'une image sur un substrat de film non absorbant en utilisant l'encre aqueuse pour jet d'encre décrite selon l'une quelconque des revendications 1 à 6.
